# EUROPEAN PATENT APPLICATION

(11) **EP 2 589 786 A1**
(43) Date of publication of application: **08.05.2013**
(21) Application number: 11187874.0
(22) Date of filing: 04.11.2011
(51) Int. Cl.: F02M 51/06, F02M 61/08

(54) **Valve assembly for a control valve and control valve**

(71) Applicant: Continental Automotive GmbH, 30165 Hannover (DE)
(72) Inventor: Grandi, Mauro, 57128 Livorno (IT); Polidori, Valerio, 57128 Livorno (IT); Filippi, Stefano, 57010 Castel' Anselmo Collesalvetti (IT)

(57) **Abstract**

The invention relates to a valve assembly (12) for a control valve (10), comprising a valve body (14) including a central longitudinal axis (L), the valve body (14) comprising a cavity (18) with a fluid inlet portion (42) and a fluid outlet portion (40), a valve needle (20) axially movable in the cavity (18), the valve needle (20) preventing a fluid flow through the fluid outlet portion (40) in a closing position and releasing the fluid flow through the fluid outlet portion (40) in further positions, and an electro-magnetic actuator unit (36). The electro-magnetic actuator unit (36) is designed to actuate the valve needle (20). The electro-magnetic actuator unit (36) comprises a pole piece (30) being fixedly arranged relative to the valve body (14), and an armature (28) being coupled to the valve needle (20) and being axially movable in the cavity (18) . The electro-magnetic actuator unit (36) comprises a permanent magnet (50) which is coupled to the valve body (14) and which is arranged in a position in that the permanent magnet (50) exerts a force on the armature (28) acting to contribute to move the valve needle (20) into the closing position.

## Description

The invention relates to a valve assembly for a control valve and a control valve.

Control valves are in wide spread use. In particular, control valves are used for internal combustion engines where they may be arranged in order to dose fluid into an intake manifold of the internal combustion engine. The fluid may be directed to injection valves which may dose the fluid into a combustion chamber of a cylinder of the internal combustion engine.

In order to enhance the combustion process in view of the creation of unwanted emissions, the injection valves may be suited to dose fluids under very high pressures. The pressures may be in case of a gasoline engine, for example, in the range of up to 200 bar and in the case of diesel engines in the range of more than 2000 bar.

In order to limit the unwanted emissions of the internal combustion engine a high accuracy of the pressure of the fluid which is dosed into the combustion chambers of the internal combustion engine is required.

The object of the invention is to create a valve assembly of a control valve and a control valve which facilitate a reliable and precise function of the control valve.

These objects are achieved by the features of the independent claims. Advantageous embodiments of the invention are given in the sub-claims.

According to a first aspect the invention is distinguished by a valve assembly for a control valve, comprising a valve body including a central longitudinal axis. The valve body comprises a cavity with a fluid inlet portion and a fluid outlet portion. The valve assembly comprises a valve needle axially movable in the cavity. The valve needle prevents a fluid flow through the fluid outlet portion in a closing position and releases the fluid flow through the fluid outlet portion in further positions. The valve assembly comprises an electro-magnetic actuator unit being designed to actuate the valve needle. The electro-magnetic actuator unit comprises a pole piece being fixedly arranged relative to the valve body, and an armature being coupled to the valve needle and being axially movable in the cavity. The electro-magnetic actuator unit comprises a permanent magnet which is coupled to the valve body and which is arranged in a position in that the permanent magnet exerts a force on the armature acting to contribute to move the valve needle into the closing position.

This has the advantage that the magnetic field of the permanent magnet may contribute to the movement of the armature and, consequently, to the movement of the valve needle between the closing position and further positions of the valve needle. As the permanent magnet generates a magnetic field in the armature which has the same direction as the magnetic field controllable by a current in a coil of the electromagnetic actuator unit the effort to obtain changes of the magnetic field in the armature may be kept small. Consequently, the permanent magnet enables that the amount of electric power consumption of the actuator unit may be small. Therefore, the electric efficiency of the actuator unit may be high. Furthermore, the magnetic field controllable by the current in the coil of the electromagnetic actuator unit may be generated very fast and, consequently, the opening and the closing process may be carried out in a very short time.

Consequently, the opening and the closing of the valve assembly may be controlled very precisely. Furthermore, the operative forces during the opening and closing process of the valve needle may be very high.

In an advantageous embodiment the armature assembly comprises a casing which is fixedly coupled to the valve body. The casing has a recess which is hydraulically separated from the cavity. The permanent magnet is arranged in the recess of the casing.

This has the advantage that the permanent magnet is separated from the cavity with the fluid. Consequently, the magnetic properties may be independent of the chemical properties of the fluid. In particular, this is important if the fluid properties may influence the magnetic properties of the materials of the permanent magnet in the case of a direct contact between the permanent magnet and the fluid.

According to a second aspect the invention is distinguished by a control valve with a valve assembly according to the first aspect of the invention.

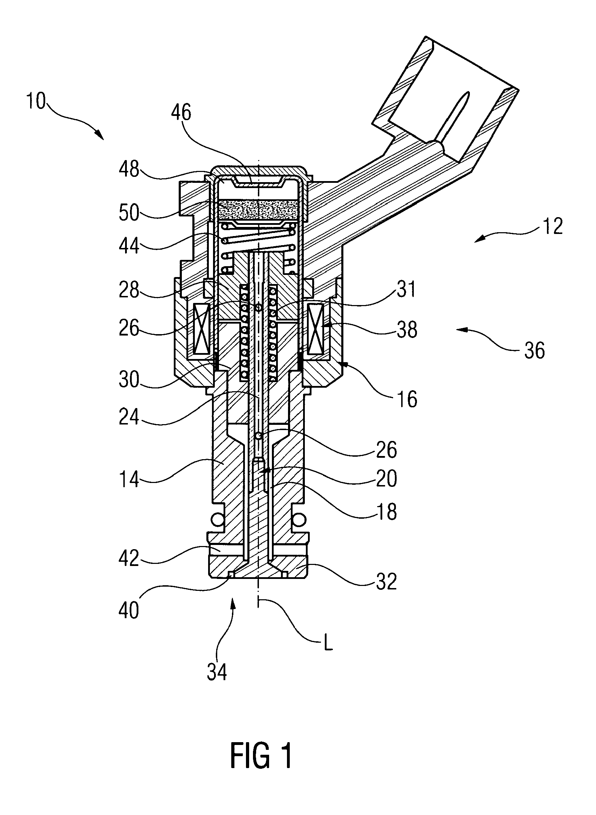

Exemplary embodiments of the invention are explained in the following with the aid of a schematic drawing. The only figure shows a control valve with a valve assembly in a longitudinal section view.

A control valve 10 that is in particular suitable for dosing fuel to an internal combustion engine comprises in particular a valve assembly 12. The valve assembly 12 comprises a valve body 14 with a central longitudinal axis L. A housing 16 is partially arranged around the valve body 14. A cavity 18 is arranged in the valve body 14. The cavity 18 takes in a valve needle 20. The valve needle 20 is hollow and has a recess 24 which is arranged in direction of the central longitudinal axis L over a portion of the axial length of the valve needle 20. The cavity 18 of the valve body 14, the recess 24 of the valve needle 20 and channels 26 between the cavity 18 of the valve body 14 and the recess 24 of the valve needle 20 form a fluid line.

The cavity 18 takes in an armature 28. The armature 28 is axially movable in the cavity 18. The armature 28 is fixedly coupled to the valve needle 20. The armature 28 is formed as a collar around the valve needle 20. The armature 28 is in contact with an inner surface of the valve body 14 and can guide the valve needle 20 in axial direction inside the valve body 14.

A pole piece 30 is arranged in the cavity 18 and is fixedly coupled to the valve body 14.

A main spring 31 is arranged in the cavity 18. The main spring 31 is mechanically coupled to the armature 28. The armature 28 forms a first seat for the main spring 31. A further seat for the main spring 31 is formed by the pole piece 30.

In a closing position of the valve needle 20 it sealingly rests on a seat plate 32 by this preventing a fluid flow through a nozzle 34. The nozzle 34 may be, for example, a hole. However, it may also be of some other type suitable for dosing fluid.

The valve assembly 12 is provided with an actuator unit 36 that is preferably an electro-magnetic actuator. The electro-magnetic actuator unit 36 comprises the armature 28 and the pole piece 30. Furthermore, the electro-magnetic actuator unit 36 comprises a coil 38 which is fixedly arranged inside the housing 16, preferably by molding. The housing 16, parts of the valve body 14, the armature 28 and the pole piece 30 are forming an electromagnetic circuit.

The cavity 18 comprises a fluid outlet portion 40 which is arranged near the seat plate 32. The fluid outlet portion 40 communicates with a fluid inlet portion 42 which is provided in the valve body 14.

A calibration spring 44 which is preferably a coil spring is arranged in the cavity of the valve body 14. The calibration spring 44 is mechanically coupled to the armature 28. The armature 28 forms a first seat for the calibration spring 44.

A casing 46 is arranged in the cavity 18. The casing 46 forms a second seat for the calibration spring 44. During the manufacturing process of the control valve 10 a calibration process is carried out. During the calibration process the casing 46 can be moved axially in the valve body 14 in order to preload the calibration spring 44 in a desired manner. By this the calibration spring 44 exerts a force on the armature 28 so that the valve needle 20 may exert a predefined force in direction to the fluid outlet portion 40. In the end of the calibration process, the casing 46 is fixedly coupled to the valve body 14.

The casing 46 has a recess 48 which is hydraulically separated from the cavity 18. Consequently, the recess 48 may be kept free from fluid.

A permanent magnet 50 is coupled to the valve body 14. Preferably, the permanent magnet 50 is arranged in the recess 48 of the casing 46. The permanent magnet 50 is positioned in a manner that the armature 28 may move in axial direction between the pole piece 30 and the permanent magnet 50.

In the following, the function of the control valve 10 is described in detail:
The fluid is led from the fluid inlet portion 42 towards the fluid outlet portion 40.
The valve needle 20 prevents a fluid flow through the fluid outlet portion 40 in the valve body 14 in a closing position of the valve needle 20.

Outside of the closing position of the valve needle 20 fluid can flow from the fluid inlet portion 42 to the fluid outlet portion 40.

In a case when the electro-magnetic actuator unit 36 is de-energized, the permanent magnet 50 causes a basic magnetization of the armature 28. The armature 28 is pulled in a direction towards the permanent magnet 50 and the valve needle 20 is in its closing position.

In the case when the electro-magnetic actuator unit 36 with the coil 38 gets energized the pole piece 30 of the actuator unit 36 may effect an electro-magnetic force on the armature 28. Due to the electro-magnetic force caused by the magnetization of the pole piece 30 the armature 28 moves axially in direction to the pole piece 30. The armature 28 takes the valve needle 20 with it so that the valve needle 20 moves in axial direction out of the closing position. Outside of the closing position of the valve needle 20 the gap between the seat plate 32 and the valve needle 20 at the axial end of the control valve 10 facing away from of the actuator unit 36 forms a fluid path and fluid can pass through the nozzle 34.

In the case when the actuator unit 36 gets de-energized the main spring 31 and the permanent magnet 50 can force the armature 28 to move in axial direction away from the fluid outlet portion 40. The armature 28 takes the valve needle 20 with it until the closing position of the valve needle 20 is reached. It is depending on the force balance between the force on the valve needle 20 caused by the actuator unit 36 with the permanent magnet 50 and the pole piece 30 and the force on the valve needle 20 caused by the main spring 31 whether the valve needle 20 is in its closing position or not.

Due to the permanent magnet 50 a good control of the movement of the valve needle 20 with short opening and closing times of the valve needle 20 may be obtained. Consequently, during the opening of the valve needle 20 a very precise amount of fluid may be obtained. Furthermore, the permanent magnet 50 allows that the energy required to operate the control valve 10 may be kept small.

The control valve 10 is described for a valve assembly 12 with an outward opening valve needle 20. However, it is understood that the actuator unit 36 with the permanent magnet 50 may be applied to a corresponding configuration of a valve assembly 12 with an inward opening valve needle 20.

## Claims

1. Valve assembly (12) for a control valve (10), comprising
- a valve body (14) including a central longitudinal axis (L), the valve body (14) comprising a cavity (18) with a fluid inlet portion (42) and a fluid outlet portion (40),
- a valve needle (20) axially movable in the cavity (18), the valve needle (20) preventing a fluid flow through the fluid outlet portion (40) in a closing position and releasing the fluid flow through the fluid outlet portion (40) in further positions, and
- an electro-magnetic actuator unit (36) being designed to actuate the valve needle (20), the electro-magnetic actuator unit (36) comprising
- a pole piece (30) being fixedly arranged relative to the valve body (14), and
- an armature (28) being coupled to the valve needle (20) and being axially movable in the cavity (18),
wherein the electro-magnetic actuator unit (36) comprises a permanent magnet (50) which is coupled to the valve body (14) and which is arranged in a position in that the permanent magnet (50) exerts a force on the armature (28) acting to contribute to move the valve needle (20) into the closing position.

2. Valve assembly (12) according to claim 1, comprising a casing (46) being fixedly coupled to the valve body (14), the casing (46) having a recess (48) being hydraulically separated from the cavity (18) and the permanent magnet (50) being arranged in the recess (48) of the casing (46).

3. Control valve (10) with a valve assembly (12) according to one of the preceding claims.
